# EUROPEAN PATENT SPECIFICATION

(11) **EP 3 820 628 B1**
(45) Date of publication and mention of the grant of the patent: **30.11.2022**
(21) Application number: 19768891.4
(22) Date of filing: 11.07.2019
(51) Int. Cl.: B05B 14/48, B05B 14/45

(54) **POWDER COATING BOOTH AND RELATED COATING PLANT**
PULVERBESCHICHTUNGSKABINE UND ZUGEHÖRIGE BESCHICHTUNGSANLAGE
CABINE DE REVÊTEMENT DE POUDRE ET INSTALLATION DE REVÊTEMENT ASSOCIÉE

(30) Priority: 12.07.2018 IT 201800007147
(43) Date of publication of application: 19.05.2021
(73) Proprietor: Siver S.r.l., 06073 Corciano (PG) Frazione Taverne (IT)
(72) Inventor: TOMASSONI, Luca, 06073 Corciano (PG) Frazione Taverne (IT)
(74) Representative: Brunacci, Marco
(86) International application number: PCT/IB2019/055911
(87) International publication number: WO 2020/012398

(56) References cited:
- EP-A1- 2 275 209
- DE-A1- 19 644 360
- JP-A- 2016 087 533
- US-A1- 2009 272 317

## Description

### Technical Field

The present invention relates to a powder coating booth and related coating plant.

### Background Art

Coating is a surface coating process carried out both for decorative purposes, coloring the elements to be coated, and for purposes of protection against corrosion and external agents.

Such process involves the realization of the coating by spraying organic matrix powders and synthetic resins which, by adhering to the surfaces, color the element being coated.

The elements to be coated are inserted in a special booth where, by means of spraying devices such as nozzle guns or the like, they are coated with powders before undergoing subsequent firing and finishing phases.

The booths are enclosures which define a substantially closed space within which the coating phase takes place.

Inside the booth, a collecting area can be identified above which the element to be coated is made to transit and at which the spraying devices operate to coat the element.

The largest amount of excess powder, which does not adhere to the element, commonly called "overspray", falls to the ground precisely at the collecting area.

Usually, the spray booths are connected to suction means which suck up the air and powder inside the booth, first conveying them to subsequent recovery and filtration means and, then, into the atmosphere.

Usually, the recovery and filtering means comprise a cyclone, adapted to separate as much powder as possible from the air to recover it, and subsequent filtering units adapted to clean the air before returning it to the atmosphere. Known booths are usually used in coating plants comprising a suction line associated with the suction means which permit sucking up air and powder from the booth.

The suction line has a recovery cyclone downstream of the booth wherein the powder is separated from the air for its recovery.

Furthermore, the suction line has one or more filtering units located downstream of the recovery cyclone adapted to filter the air before returning it to the atmosphere.

One of the drawbacks of known booths relates to the recovery of excess powder.

The operation of the cyclone upstream of the filtering units requires a significant consumption of energy as the air flow rate with which it works is proportionate to the volume of the booth.

Furthermore, any color change operations would be slowed down by the fact that to recover powder to be reused, the entire booth must be cleaned to prevent residual powder of different colors mixing with other powder and affecting recovery.

Other powder coating booth are known from DE 196 44 360 A1.

### Description of the Invention

The main aim of the present invention is to devise a powder coating booth and related coating plant which allow facilitating the passage from one coating phase to another.

One object of the present invention is to devise a powder coating booth and related coating plant which allow reducing the costs of the coating phase.

One object of the present invention is devise a powder coating booth and related coating plant which can facilitate the color change phases.

Another object of the present invention is to devise a powder coating booth and related coating plant which allows overcoming the aforementioned drawbacks of the prior art in a simple, rational, easy, effective to use and low cost solution. The objects set forth above are achieved by the present powder coating booth and related coating plant having the characteristics of claim 1 and claim 7.

### Brief Description of the Drawings

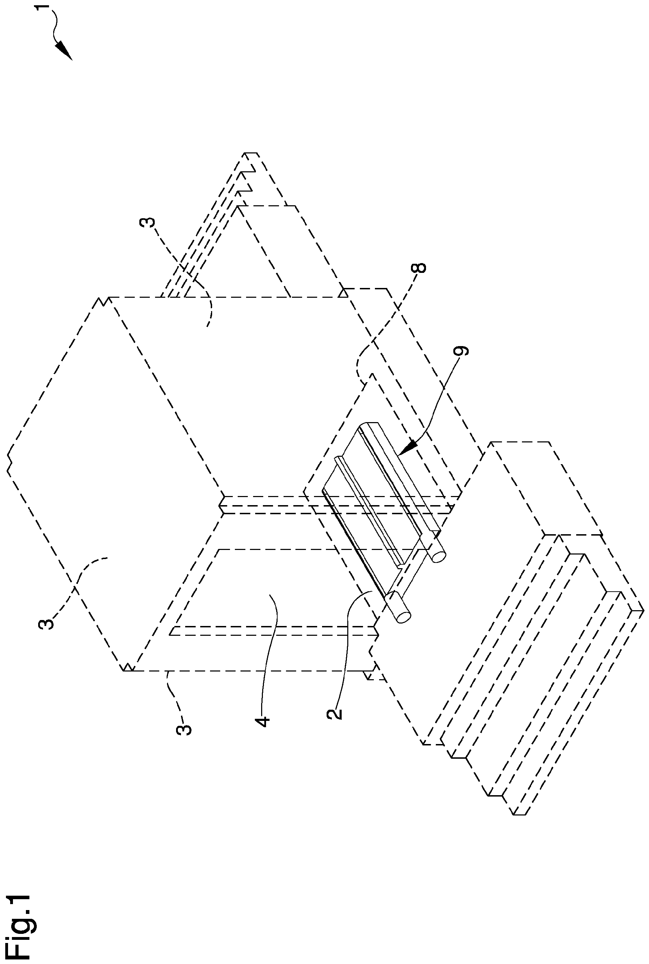

Figure 1 is an axonometric view of the booth according to the invention;

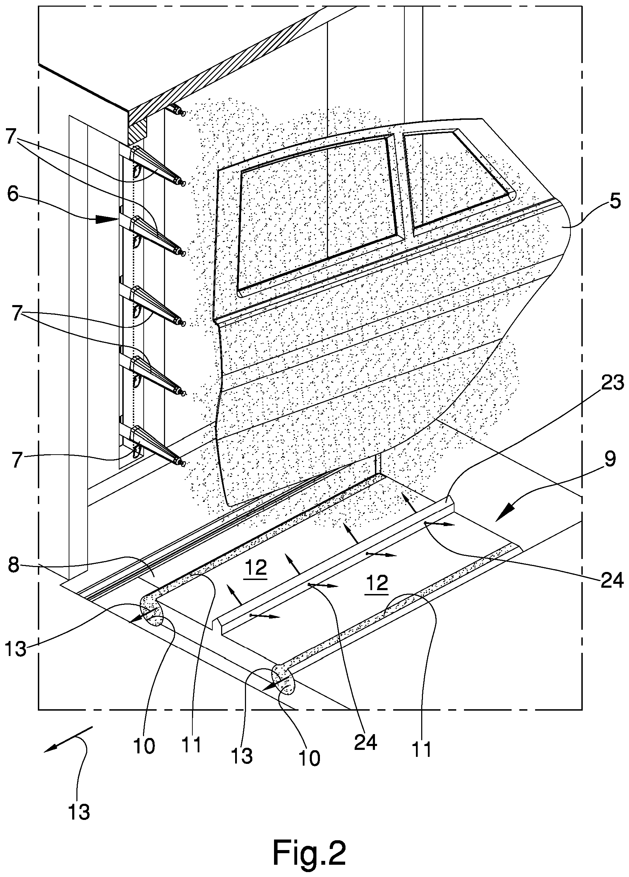

Figure 2 is an axonometric view of a detail of the booth according to the invention;
Figure 3 is a schematic view of the plant according to the invention;

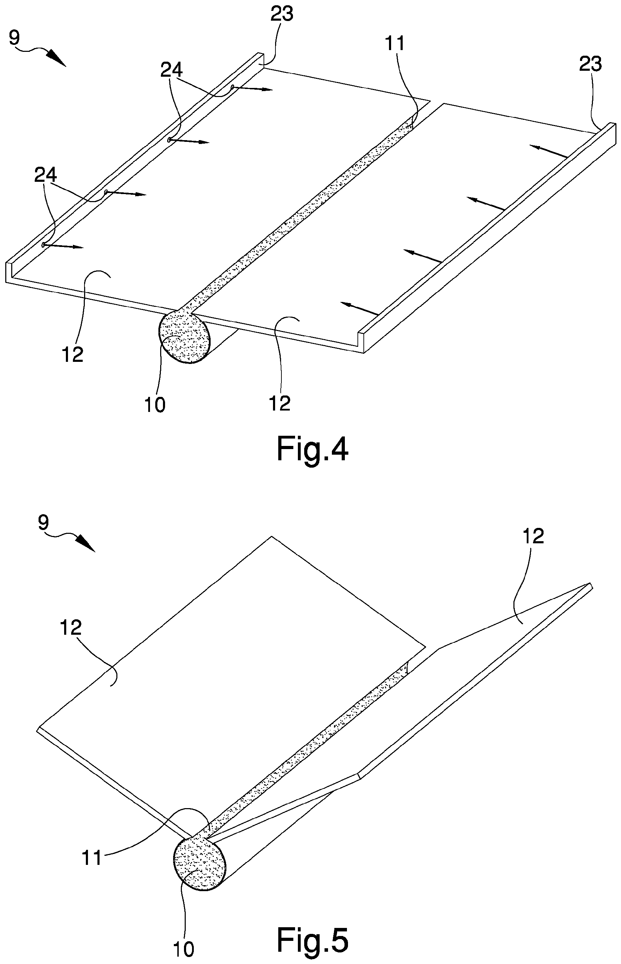

Figure 4 is an axonometric view of a second embodiment of a detail of the booth according to the invention;
Figure 5 is an axonometric view of a third embodiment of a detail of the booth according to the invention.

### Embodiments of the Invention

With particular reference to these illustrations, reference numeral 1 globally indicates a powder coating booth.

The coating booth 1 has a bottom surface 2 and is delimited by side walls 3 which define the prismatic structure thereof.

The booth 1 defines an inner space 4 in which is insertable an element to be coated 5.

In particular, the booth 1 comprises a spraying device 6 adapted to spray coating powder on the element to be coated 5.

In the present embodiment, the spraying device 6 comprises a plurality of nozzle guns 7 connected to a system for feeding coating powders, for simplicity not shown in the figures.

Solutions cannot be ruled out which provide for spraying devices provided with a single gun or provided with guns different from those illustrated. Furthermore, the booth 1 comprises at least one collecting area 8 defined on the bottom surface 2.

The collecting area 8 can be identified in the proximity of the spraying device 6. On top of the collecting area 8 the element to be coated 5 passes to be coated with coating powder.

The excess powder, commonly called "overspray" which, sprayed on the element to be coated 5, has not adhered to the surface to be coated, falls in the collecting area.

The collecting area 8, therefore, defines an area identifiable on the bottom surface 2 which is the area where most of the excess powder or "overspray" falls.

The booth 1 is associated with first suction means, for simplicity not shown in the illustrations, for the sucking and conveying air coming out of the inner space 4.

The first suction means comprise at least one fan adapted to create a vacuum inside the booth 1 in order to let the air flow from the booth 1 towards a suction line adapted to convey the air and any residual powder.

The action of the first suction means prevents the powder being sprayed from coming out into the atmosphere through the slits on the walls of the booth 1. According to the invention, the collecting area 8 is associated with second suction means adapted to suck and convey the excess powder coming out of said inner space 4.

The collecting area 8, therefore, is associated with suction means dedicated to it for sucking the overspray.

In particular the booth 1 comprises a collecting device 9 positioned in the collecting area 8 to receive the excess powder.

The collecting device 9 is associated with second suction means, for simplicity not shown in the figures, adapted to suck up and convey the excess powder out of the inner space 4.

Conveniently, the second suction means comprise at least one fan adapted to create a vacuum at the collecting device 9 so as to suck up the excess powder deposited thereon and convey it out of the booth.

In particular, the collecting device 9 comprises at least one conveying channel 10 associated with the second suction means and adapted to convey the excess powder.

The second suction means create a vacuum inside the conveying channel 10 sucking up most of the excess powder.

The collecting device 9, in fact, comprises at least one slit 11 communicating with the conveying channel 10 and through which the excess powder can pass to enter the conveying channel 10.

In the present embodiment, the collecting device 9 comprises a collecting surface 12 on which the excess powder falls.

The conveying channel 10 is located below the collecting surface 12 and the slit 11 is formed directly on the collecting surface 12.

This way, the action of the second suction means makes it possible to displace and suck up the excess powder from the collecting surface 12 to the conveying channel 10 through the slit 11.

As shown in the figures, the collecting device 9 comprises two conveying channels 10 and two slits 11 communicating with the respective conveying channels 10.

Conveniently, the conveying channels 10 are positioned symmetrically with respect to an axis of symmetry of the collecting device 9 parallel to a conveying direction 13 of the excess powder.

In particular, the conveying channels 10 are positioned symmetrically with respect to an axis of symmetry of the collecting surface 12 parallel to a conveying direction 13.

Preferably, the conveying channels 10 are associated with outlet ducts 14 which are connected to each other to form a single recovery duct 15.

In the present embodiment, the collecting surface 12 is arranged at the same height as the bottom surface 2.

Solutions which provide for collecting surfaces that are raised or lowered with respect to the bottom surface cannot be ruled out, just as solutions which provide for different positioning of the conveying channels 10 cannot be ruled out either.

Solutions cannot also be ruled out which provide for a different number of conveying channels 10, or a different number of slits 11, or other through openings in place of the slits 11.

Preferably, the collecting device 9 comprises at least one blowing element 23 having at least one blowing opening 24 facing the slit 11 and associated with compressor means for blowing air through the blowing opening 24.

This way, the powder deposited on the collecting surfaces 12 is pushed towards the slit 11, favoring its conveying into the channel 10.

In the present embodiment, the collecting device 9 comprises a single blowing element 23 and has a longitudinal extension substantially parallel to the channels 10.

Conveniently, the blowing element 23 has blowing openings 24 facing both slits 11.

The slits 11 are placed one on the opposite side of the other with respect to the blowing element 23.

In the following, reference numeral 16 globally indicates a coating plant. According to the invention, the coating plant 16 comprises the powder coating booth 1 described above.

Still according to the invention, the plant 16 comprises a first suction line 17 associated with the booth 1, comprising the first suction means and adapted to convey a mixture of air and powder out of the booth 1.

Advantageously, the first suction line 17 comprises at least one filtering unit 18 located downstream of the booth 1 and adapted to intercept the mixture of air and powder before conveying it into the atmosphere.

This way, powder residues and other coarse substances can be separated from the air before this is released back into the atmosphere.

The first suction line 17 and the filtering unit 18 are illustrated in a simplified manner.

The filtering unit 18 comprises at least one of the filters known to the state-of-the-art such as bag filters, gravitational filters or other types of filters.

Still according to the invention, the plant 16 comprises a second suction line 19 associated with the collecting device 9.

The second suction line 19 comprises the second suction means and is adapted to convey the excess powder collected from the collecting device 9 to a powder recovery device, indicated with reference numeral 20.

Still according to the invention, the plant 16 comprises the recovery device 20. The recovery device 20 allows recovering the excess powder and to be able to reuse it later.

Usefully, the recovery device 20 is of the type of a centrifugal cyclone. Advantageously, the plant 16 comprises at least one color change device 21 associated with the recovery device 20.

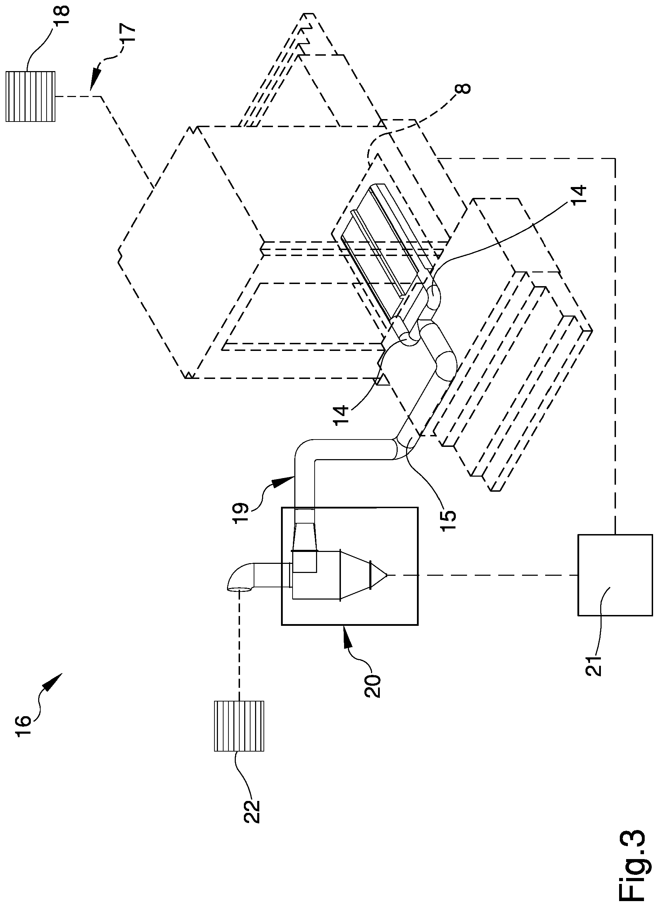

The color change device 21 is schematically illustrated in Figure 3.

The excess powder recovered by the recovery device 20 can be sent to the color change device 21, thereby facilitating its reuse.

Such solution is particularly suitable for color change devices which make it possible to load the powder of a first color to feed the spraying device 6 and, at the same time, to unload the powder of a second color in special containers, to be recovered and coming from the booth 1.

Advantageously, the plant 16 also comprises a second filtering unit 22 located downstream of the recovery device 20 and adapted to filter the air coming from the recovery device before returning it to the atmosphere.

The operation of the present invention is as follows.

The element to be coated 5, once it has entered the booth 1, passes on top of the collecting area 8 and is coated with coating powder by means of the operation of the nozzle guns 7.

The excess powder or overspray falls on the collecting surface 12 of the collecting device 9.

Thanks to the vacuum generated by the second suction means, the excess powder is sucked up into the conveying channels 10 passing through the slits 11 and is subsequently conveyed along the direction 13 and, therefore, in the second suction line 19.

The recovery device 20 precipitates the excess powder conveyed in the suction line 19.

The second filtering unit 22 cleans the air coming from the recovery device 20. Subsequently, the precipitated powder is transferred to be reused later.

The first suction means, on the other hand, maintain an air circulation inside the booth 1, conveying the air from the inner space 4 to the first suction line 17. The filtering unit 18 separates the residual powder and other impurities present in the air coming from the booth before such air is released back into the atmosphere.

A second embodiment of the coating booth and related coating plant is completely similar to the first embodiment described above and differs in that the collecting device 9 comprises two blowing elements 23, and comprises a single slit 11 and a single conveying channel 10.

The two blowing elements 23 have blowing openings 24 facing the slit 11.

The latter is interposed between the two blowing elements 23.

The blowing openings 24, therefore, send the air towards the center, pushing the powder deposited towards the slit 11.

Conveniently, the slit 11 is equidistant from the blowing elements 23. Preferably, the blowing elements 23 are placed at the peripheral edge of the collecting device 9.

A third embodiment of the coating booth and related coating plant is completely similar to the embodiment described above and differs in that the collecting device 9 is shaped like a hopper.

In particular, the collecting surfaces 12 are inclined with respect to the horizontal and converge at the slit 11.

This way, the powder is pushed by gravity towards the slit 11 and subsequently conveyed by the channel 10.

In the embodiments shown in the illustrations, the collecting device 9 has smaller dimensions than those of the bottom surface 2, but solutions wherein the bottom surface 2 and the collecting device 9 have the same dimensions cannot be ruled out.

In practice, it has been ascertained that the described invention achieves the intended objects and, in particular, the fact is underlined that the powder coating booth and its related coating plant make it possible to facilitate the transition from one coating phase to another.

Compared to known plants, the first suction line does not require a cyclone before the filtering unit, while a second suction line dedicated to the recovery of the overspray has been fitted.

The cyclone fitted in the second suction line, the air flow to be sucked up being limited to the collecting device, is much smaller than the cyclones fitted on traditional plants.

This way, time is saved as regards cleaning operations, since it is necessary to clean only the collecting device, the cyclone (much smaller than the cyclones used in known plants) and the related channel connecting these.

It is no longer necessary to clean the entire booth, but only the collecting device in order to make correct color change.

As a result, the time required to change color is reduced, with the transition from one coating phase to another being facilitated.

Therefore, the powder coating booth and the related coating plant facilitate the color change phases, speeding them up, with consequent improvements both in terms of execution and in economic terms.

This means a significant reduction in downtime between the coating phases with a consequent reduction in operating costs compared to known powder coating booths and related known coating plants.

## Claims

1. Powder coating booth (1) having a bottom surface (2), defining an inner space (4) in which is insertable an element to be coated (5) and comprising:
- at least one spraying device (6) adapted to spray coating powder on said element to be coated (5);
- at least one collecting area (8) defined in said inner space (4), on top of which said element to be coated (5) passes to be coated with coating powder and in which the excess powder falls down;
said booth (1) being associated with first suction means for sucking and conveying air exiting said inner space (4);
wherein said first suction means comprise at least one fan adapted to create a vacuum inside said booth (1) in order to let the air flow from said booth (1) towards a suction line adapted to convey the air and any residual powder; wherein the action of said first suction means prevents the powder being sprayed from coming out into the atmosphere through the slits on the walls of said booth (1);
wherein said collecting area (8) is associated with second suction means adapted to suck and convey said excess powder exiting said inner space (4); wherein said booth (1) comprises a collecting device (9) positioned in said collecting area (8) to receive said excess powder, associated with said second suction means;
wherein said collecting device (9) comprises at least one conveying channel (10) associated with said second suction means and adapted to convey said excess powder.

2. Booth (1) according to claim 1, **characterized by** the fact that said collecting device (9) comprises at least one slit (11) communicating with said conveying channel (10) and through which said excess powder can pass to enter said conveying channel (10).

3. Booth (1) according to one or more of the preceding claims, **characterized by** the fact that it comprises two of said conveying channels (10) and two of said slits (11) communicating with respective said conveying channels (10).

4. Booth (1) according to one or more of the preceding claims, **characterized by** the fact that said collecting device (9) comprises at least one blowing element (23) having at least one blowing opening (24) facing said slit (11) and associated with compressor means for blowing air through said blowing opening (24).

5. Coating plant (16) **characterized by** the fact that it comprises:
- a powder coating booth (1) according to one or more of the preceding claims;
- a first suction line (17) associated with said booth (1), comprising said first suction means and adapted to convey a mixture of air and powder at the exit of said booth (1);
- a second suction line (19) associated with said collecting device (9), comprising said second suction means and adapted to convey said excess powder to a powder recovery device (20); and
- said recovery device (20).

6. Plant (16) according to claim 5, **characterized by** the fact that said recovery device (20) is of the type of a centrifugal cyclone.

7. Plant (16) according to claim 5 or 6, **characterized by** the fact that it comprises at least one color change device (21) associated with said recovery device (20).

8. Plant (16) according to one or more of claims from 5 to 7, **characterized by** the fact that said first suction line (17) comprises at least one filtering unit (18) located downstream of said booth (1) and adapted to intercept said mixture of air and powder before conveying it into the atmosphere.

## Patentansprüche

1. Pulverbeschichtungskabine (1) mit einer Bodenfläche (2), die einen Innenraum (4) definiert, in den ein zu beschichtendes Element (5) einführbar ist, und umfassend:
- mindestens eine Sprühvorrichtung (6), die ausgebildet ist, Beschichtungspulver auf das zu beschichtende Element (5) zu sprühen;
- mindestens einen in dem Innenraum (4) definierten Sammelbereich (8), über den sich das zu beschichtende Element (5) bewegt, um mit Beschichtungspulver beschichtet zu werden, und in den das überschüssige Pulver fällt;
wobei die Kabine (1) ersten Saugmitteln zum Absaugen und Fördern von aus dem Innenraum (4) austretender Luft zugeordnet ist,
wobei die ersten Saugmittel mindestens ein Gebläse umfassen, das ausgebildet ist, im Inneren der Kabine (1) einen Unterdruck zu erzeugen, um die Luft aus der Kabine (1) zu einer Saugleitung strömen zu lassen, die ausgebildet ist, die Luft und jegliches überschüssige Pulver zu fördern;
wobei die Wirkung der ersten Saugmittel verhindert, dass das Pulver, das gesprüht wird, durch die Schlitze an den Wänden der Kabine (1) in die Atmosphäre gelangt;
wobei dem Sammelbereich (8) zweite Saugmittel zugeordnet sind, die ausgebildet sind, das überschüssige Pulver abzusaugen und aus dem Innenraum (4) zu fördern;
wobei die Kabine (1) eine Sammelvorrichtung (9) umfasst, die in dem Sammelbereich (8) angeordnet ist, um das überschüssige Pulver aufzunehmen, und die den zweiten Saugmitteln zugeordnet ist;
wobei die Sammelvorrichtung (9) mindestens einen Förderkanal (10) umfasst, der den zweiten Saugmitteln zugeordnet ist und ausgebildet ist, das überschüssige Pulver zu fördern.

2. Kabine (1) nach Anspruch 1, **dadurch gekennzeichnet, dass** die Sammelvorrichtung (9) mindestens einen Schlitz (11) aufweist, der mit dem Förderkanal (10) in Verbindung steht und durch den das überschüssige Pulver hindurchtritt, um in den Förderkanal (10) zu gelangen.

3. Kabine (1) nach einem oder mehreren der vorhergehenden Ansprüche, **dadurch gekennzeichnet, dass** sie zwei der Förderkanäle (10) und zwei der Schlitze (11) umfasst, die mit den entsprechenden Förderkanälen (10) in Verbindung stehen.

4. Kabine (1) nach einem oder mehreren der vorhergehenden Ansprüche, **dadurch gekennzeichnet, dass** die Sammelvorrichtung (9) mindestens ein Blaselement (23) umfasst, das mindestens eine Blasöffnung (24) aufweist, die dem Schlitz (11) zugewandt ist, und das Kompressormitteln zum Blasen von Luft durch die Blasöffnung (24) zugeordnet ist.

5. Beschichtungsanlage (16), **dadurch gekennzeichnet, dass** sie umfasst:
- eine Pulverbeschichtungskabine (1) nach einem oder mehreren der vorhergehenden Ansprüche;
- eine erste Ansaugleitung (17), die der Kabine (1) zugeordnet ist, die ersten Saugmittel umfasst und ausgebildet ist, ein Gemisch aus Luft und Pulver am Ausgang der Kabine (1) zu fördern;
- eine zweite Ansaugleitung (19), die der Sammelvorrichtung (9) zugeordnet ist, die zweiten Saugmittel umfasst und ausgebildet ist, das überschüssige Pulver zu einer Pulverrückgewinnungsvorrichtung (20) zu fördern; und
- die Rückgewinnungsvorrichtung (20).

6. Anlage (16) nach Anspruch 5, **dadurch gekennzeichnet, dass** die Rückgewinnungsvorrichtung (20) von der Art eines Zentrifugalzyklons ist.

7. Anlage (16) nach Anspruch 5 oder 6, **dadurch gekennzeichnet, dass** sie mindestens eine Farbwechselvorrichtung (21) umfasst, die der Rückgewinnungsvorrichtung (20) zugeordnet ist.

8. Anlage (16) nach einem oder mehreren der Ansprüche 5 bis 7, **dadurch gekennzeichnet, dass** die erste Ansaugleitung (17) mindestens eine Filtereinheit (18) umfasst, die stromabwärts der Kabine (1) angeordnet und ausgebildet ist, das Gemisch aus Luft und Pulver abzufangen, bevor es in die Atmosphäre geleitet wird.

## Revendications

1. - Cabine d'application de poudre en revêtement (1) ayant une surface inférieure (2), définissant un espace intérieur (4) dans lequel un élément à revêtir (5) peut être introduit, et comprenant :
- au moins un dispositif de pulvérisation (6) apte à pulvériser de la poudre de revêtement sur ledit élément à revêtir (5)
- au moins une zone de collecte (8) définie dans ledit espace intérieur (4), sur laquelle ledit élément à revêtir (5) passe pour être revêtu de poudre de revêtement et dans laquelle l'excès de poudre tombe ;
ladite cabine (1) étant associée à des premiers moyens d'aspiration pour aspirer et transporter de l'air sortant dudit espace intérieur (4) ;
lesdits premiers moyens d'aspiration comprenant au moins un ventilateur apte à créer un vide à l'intérieur de ladite cabine (1) afin de laisser l'air s'écouler de ladite cabine (1) jusqu'à une conduite d'aspiration apte à transporter l'air et toute poudre résiduelle ;
l'action desdits premiers moyens d'aspiration empêchant la poudre qui est pulvérisée de sortir dans l'atmosphère à travers les fentes sur les parois de ladite cabine (1) ; ladite zone de collecte (8) étant associée à des seconds moyens d'aspiration aptes à aspirer et transporter ledit excès de poudre sortant dudit espace intérieur (4) ;
ladite cabine (1) comprenant un dispositif de collecte (9) positionné dans ladite zone de collecte (8) pour recevoir ledit excès de poudre, associé auxdits seconds moyens d'aspiration ;
ledit dispositif de collecte (9) comprenant au moins un canal de transport (10) associé auxdits seconds moyens d'aspiration et apte à transporter ledit excès de poudre.

2. - Cabine (1) selon la revendication 1, **caractérisée par le fait que** ledit dispositif de collecte (9) comprend au moins une fente (11) communiquant avec ledit canal de transport (10) et à travers laquelle ledit excès de poudre peut passer pour entrer dans ledit canal de transport (10).

3. - Cabine (1) selon une ou plusieurs des revendications précédentes, **caractérisée par le fait qu'**elle comporte deux desdits canaux de transport (10) et deux desdites fentes (11) communiquant avec lesdits canaux de transport (10) respectifs.

4. - Cabine (1) selon une ou plusieurs des revendications précédentes, **caractérisée par le fait que** ledit dispositif de collecte (9) comprend au moins un élément de soufflage (23) ayant au moins une ouverture de soufflage (24) faisant face à ladite fente (11) et associé à des moyens de compression pour souffler de l'air à travers ladite ouverture de soufflage (24).

5. - Installation d'application de revêtement (16) **caractérisée par le fait qu'**elle comprend :
- une cabine d'application de poudre en revêtement (1) selon une ou plusieurs des revendications précédentes ;
- une première conduite d'aspiration (17) associée à ladite cabine (1), comprenant lesdits premiers moyens d'aspiration et apte à transporter un mélange d'air et de poudre à la sortie de ladite cabine (1) ;
- une seconde conduite d'aspiration (19) associée audit dispositif de collecte (9), comprenant lesdits seconds moyens d'aspiration et apte à transporter ledit excès de poudre jusqu'à un dispositif de récupération de poudre (20) ; et
- ledit dispositif de récupération (20).

6. - Installation (16) selon la revendication 5, **caractérisée par le fait que** ledit dispositif de récupération (20) est du type d'un cyclone centrifuge.

7. - Installation (16) selon la revendication 5 ou 6, **caractérisée par le fait qu'**elle comprend au moins un dispositif de changement de couleur (21) associé audit dispositif de récupération (20).

8. - Installation (16) selon une ou plusieurs des revendications 5 à 7, **caractérisée par le fait que** ladite première conduite d'aspiration (17) comprend au moins une unité de filtration (18) située en aval de ladite cabine (1) et apte à intercepter ledit mélange d'air et de poudre avant de le transporter dans l'atmosphère.
